# EUROPEAN PATENT APPLICATION

(11) **EP 1 734 430 A1**
(43) Date of publication of application: **20.12.2006**
(21) Application number: 05720647.6
(22) Date of filing: 07.03.2005
(51) Int. Cl.: G05B 19/418

(54) **APPLICATION MANAGEMENT SYSTEM**

(30) Priority: 09.03.2004 JP 2004064943
(71) Applicant: HONDA MOTOR CO., Ltd., Tokyo 107-8556 (JP)
(72) Inventor: NAKAHARA, Daisuke, c/o HONDA MOTOR CO., LTD., Tokyo 1078556 (JP)
(74) Representative: Piésold, Alexander James
(86) International application number: PCT/JP2005/004376
(87) International publication number: WO 2005/085967

(57) **Abstract**

A drawing application management system is constituted by parts list information and a modification information transmission function for correlating parts information with a product model and transmitting the parts information to a plurality of locations; an application decision function for deciding whether to apply the parts information correlated with the product model to producing the product model at each of the locations; an application report function for reporting the application of the parts information to the product model when the application of the parts information is decided at each of the locations; and application management information and an application management function for receiving the application report and managing the application of the parts information at each of the locations.

## Description

### TECHNICAL FIELD

The present invention relates to an application management system for managing parts list information for managing parts design information, information associated with the parts and the modification history of the information, and a target to which the parts list information is applied.

### TECHNICAL BACKGROUND

For example, products such as automobile products are constituted by a very large number of parts. Normally, the automobile maker manufactures a plurality of vehicle models. However, while there are parts that are commonly used in a plurality of vehicle models, there are also parts that are unique to the respective vehicle models. Further, in cases where there are differences in the producing factory or production line or the like even for the same vehicle model and where parts differ due to differences in the shipping target region and where modifications have been added, the number of parts managed in order to produce the automobile based on these circumstances is huge and the corresponding management information (drawings, constitution, logistical destination, color, and so forth) is also extensive.

For such products, methods of managing part constitutions and so forth employed by the products by means of a parts list system are known (See Japanese Patent Application Laid Open No. 2003-281197 (fifth page, second figure), for example). A parts list system is constituted such that all the parts used by a certain vehicle model including parts or the like that have been modified while maintaining the parent-child relationship between the parts of this vehicle model are managed as a tree configuration, or, when the specifications of parts are different, the parts list system is constituted such that the parts are treated as different parts and managed by the parts list system by changing the respective identification information.

### DISCLOSURE OF THE INVENTION

### PROBLEMS TO BE SOLVED BY THE INVENTION

However, there has been the problem that, in the management system of a parts list system such as that described above, when even one of the managed elements (parts information, constitution information, logistical destination, color information and so forth) of the parts information managed by the parts list is modified, all of the managed elements must be modified and managed, the data increases, and maintenance of the consistency between the elements is problematic. Further, when even one of the constituent elements of the parts differs according to the model and factory, there is also the problem that the parts list must be managed with each of these elements serving as units. There is also the problem that, even when efficiency is improved by integrating the parts management that is used in the factories or the like developed in the respective regions of the world, the management of parts must be centralized.

The present invention was conceived in view of this problem, an object thereof being to provide an application management system capable of efficiently managing large volumes of parts information by managing parts list information such as parts-related design information and manufacturing application management information for managing targets to which the parts list information is applied.

### MEANS TO SOLVE THE PROBLEMS

In order to solve the above problem, the application management system according to the first invention is constituted comprising: parts information transmission means for transmitting parts information in correlation with a product model to a plurality of locations (the parts list information 30 and modification information transmission function 8 according to this embodiment, for example); application decision means for deciding whether to apply the parts information correlated with the product model to producing the product model at each of the locations (the application decision function 9 according to this embodiment, for example); parts information reporting means for reporting the application of the parts information to the product model as an application report when the application of the parts information is decided at each of the locations (the application report function 10 according to this embodiment, for example); and application management means for receiving the application report and managing the application of the parts information at each of the locations (the manufacturing application management information 40 and application management function 12 according to this embodiment, for example).

Further, the application management system according to the second invention is constituted comprising: parts list information storage means for managing parts information and modification information of the parts information (the part history management function 7 and parts list information 30 according to this embodiment, for example); parts modification information transmission means for transmitting, when there has been a modification to the parts information, the parts information and the modification information in correlation with model information that represents the product model to a plurality of locations (the modification information generation function 8 according to this embodiment, for example); application decision means for deciding whether to apply the modified parts information and modification information to the product model at each of the locations (the application decision function 9 according to the embodiment, for example); parts information reporting means for reporting, when the application of the parts information and the modification information to the product model is decided at each of the locations, the parts information and the modification information as an application report together with location information representing the locations and the model information (the application report function 10 according to this embodiment, for example); ID generation means for receiving the application report and generating identification information that unambiguously identifies auxiliary information comprising a combination of the modification information, the location information, and the model information (the ID generation function 11 according to this embodiment, for example); and application management means for storing the identification information and the auxiliary information and for updating and storing, as the location information, all the locations to which the parts information and the modification information corresponding with the identification information are applied when there is an increase in the locations to which the parts information and the modification information are applied (the application management function 12 and manufacturing application management information 40 according to this embodiment, for example).

Here, the parts information is preferably constituted comprising at least one information item from among design information for parts of the product model, constitution information for the parts, logistics information for the parts, and color information for the parts.

In addition, the application management system is preferably constituted comprising parts list information request means for inputting and transmitting the location information and the model information at each of the locations (the parts list request function 14 according to this embodiment, for example) and parts list generation means for receiving the location information and the model information, collecting the parts information corresponding with the location information and the model information, and transmitting the parts information to the locations (the parts list generation function 15 according to this embodiment, for example).

### ADVANTAGEOUS EFFECTS OF THE INVENTION

When the drawing application management system according to the present invention is constituted as described above, because the parts list information and manufacturing application management information can be centrally managed, the lead time of an update when the drawings (parts list information and so forth) is modified can be shortened. Furthermore, by managing the modification history of the parts list information and using identification information to manage correlations with the targets to which the modification history is applied, it is possible to manage a variety of targets (according to model and factory and so forth) that are applied to one parts list information item, whereby the management of parts information can be made more efficient.

### BRIEF DESCRIPTION OF THE DRAWINGS

Fig. 1 is a block diagram showing the drawing application management system according to the present invention;
Fig. 2 is a data structure view that shows a data structure for managing drawing application information;
Fig. 3 is an explanatory diagram of the flow according to which drawing application information is updated;
Fig. 4 is a flowchart of the flow for generating manufacturing application management information;
Fig. 5 is a flowchart that shows the flow for creating a modified drawing by referencing parts list information and manufacturing application management information in a factory; and
Fig. 6 is a flowchart that shows the flow for registering a modified drawing.

### DESCRIPTION OF THE PREFERED EMBODIMENTS

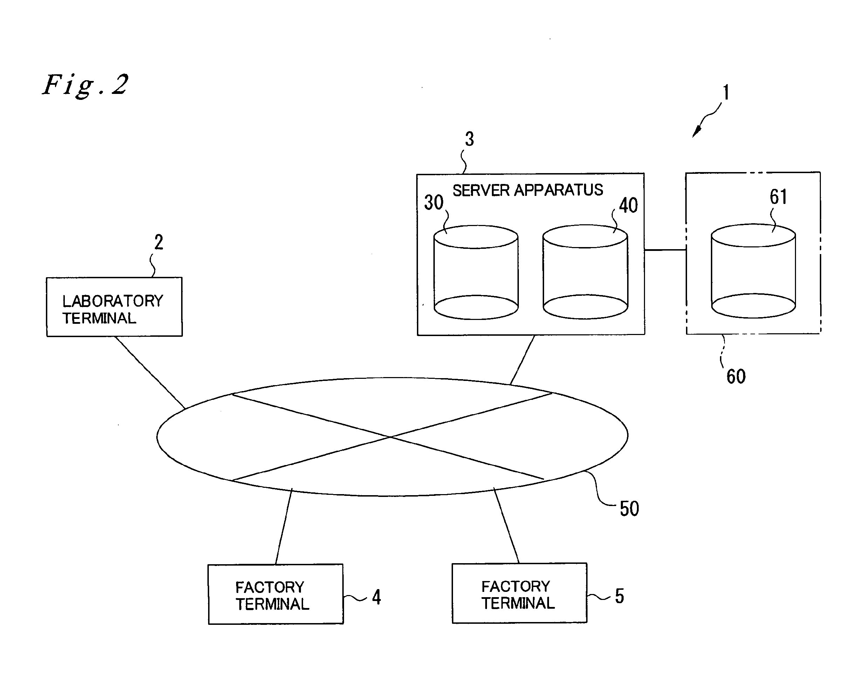

A preferred embodiment of the present invention will be described hereinbelow with reference to the drawings. This application management system 1 is constituted by a laboratory terminal 2 installed in a laboratory that is connected to a network 50, a server apparatus 3 that is installed in a management center, and factory terminals 4 and 5 that are installed in factories constituting locations, as shown in Fig. 2. Further, Fig. 2 shows a case in which the application management system 1 has two factories as target locations. The server apparatus 3 installed in the management center manages information on parts that is applied to a product and information to which the parts are applied. This information is constituted by parts list information 30 and manufacturing application management information 40. Further, because, as will be described subsequently, production model information 61 that is managed by a production management system 60 is used each time manufacturing application management information 40 is generated, the production management system 60 is constituted capable of co-operating with the server apparatus 3 via a network or the like.

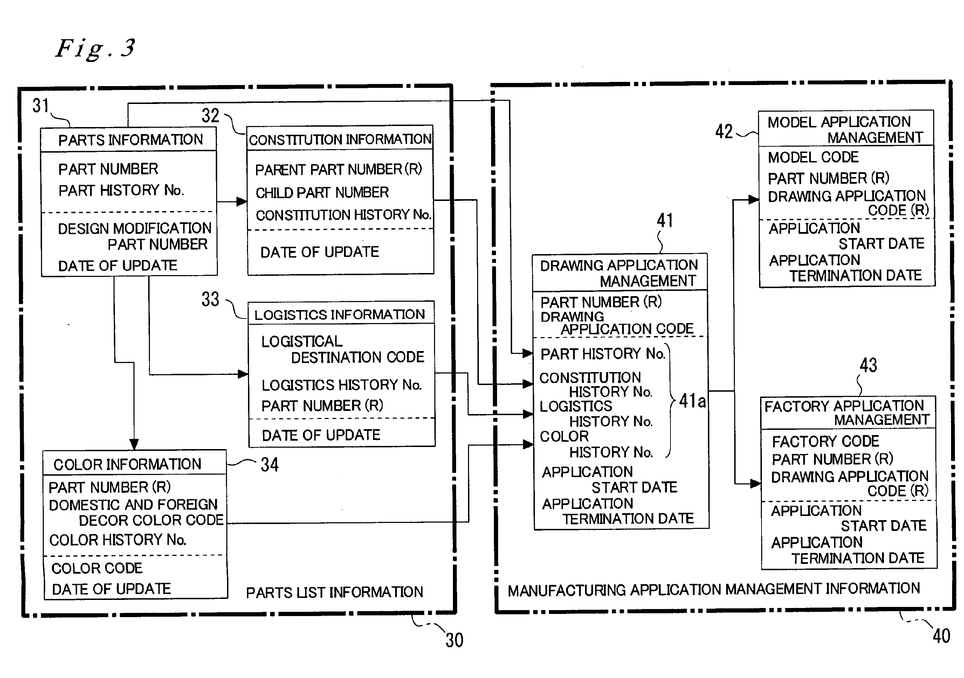

The parts list information 30 and manufacturing application management information 40 managed by the server apparatus 3 has the data structure shown in Fig 3. The parts list information 30 is constituted by parts information 31, constitution information 32, logistics information 33, and color information 34. Further, the manufacturing application management information 40 is constituted by drawing application management 41, model application management 42, and factory application management 43.

The parts list information 30 is a database for managing drawings of the parts for each of the parts (design information), constitutions (parent-child relationships of the parts), colors, and logistical destinations and so forth by means of identification numbers (part numbers) unambiguously decided for the parts. The parts information 31 is data for managing the design information of the parts which is managed with the part numbers and the parts historic numbers representing the modification history serving as the main key. When a parts design modification is performed and a drawing is updated, because the parts historic number is stored changed (incremented by one from the current number, for example), information on a predetermined parts historic number corresponding with the part number can be decided. The parts information 31 is managed with the design modification part number of the part and the date of the update serving as the main key.

The constitution information 32 is data for managing child parts that constitute a part corresponding with a part number. The constitution historic number when the parent part number, child part number, and the constitution thereof are updated is the main key and the date of the update is managed with respect to the main key. Further, a parent part number is used for the correlation with the parts information 31 in the constitution information 32. That is, the child parts that are combined in order to constitute a certain part (parent part) are managed by the constitution information 32. When the child part thus constituted is updated with respect to the parent part, the constitution historic number of the constitution information 32 is changed and new data are managed.

The logistics information 33 is data for managing the logistical destination of the parts. The part number and the logistics historic number that shows the history when the logistical destination code and the logistical destination are updated are the main key and the date of the update is managed with respect to the main key. Further, the color information 44 is data for managing the colors of parts. The part number and the color historic number that indicates the history when the domestic and foreign decor code and the color of the part are updated are the main key and the colors of the part are managed by color codes with respect to the main key. Where the update dates that are managed by the respective information items 31 to 34 that constitute the parts list information 6 are concerned, the dates on which data are updated (new historic numbers are added) are managed. Here, the 'main key' signifies the items required in order to unambiguously specify the information among the items constituting the information.

On the other hand, in order to indicate what kind of combinations of historic numbers (the combinations are known as 'drawing application information') are applied to the product in each case from among parts information 31, constitution information 32, logistics information 33, and color information 34 that constitute the parts list information 30, the manufacturing application management information 40 manages the combinations of historic numbers and the application destinations of the combinations. The drawing application management 41 of the manufacturing application management information 40 manages the combinations of historic numbers of the parts list information 30 (that is, drawing application information 41a) and the parts historic numbers, constitution historic numbers, logistics historic numbers, and color historic numbers and so forth are managed with the part numbers and drawing application codes serving as the main key. That is, the drawing application information 41a, which is a combination of these historic numbers, can be unambiguously specified by using the part number and drawing application code.

Further, in order to manage which target the drawing application information 41a (combination of historic numbers) identified by the drawing application code thus managed is applied to, model application management 42 for managing which product model the drawing application information 41a is applied to and factory application management 43 for managing which factory the drawing application information 41a is applied to are employed. The model application management 42 is managed with the model code for identifying the application model and the drawing application code applied to the part number and the application model serving as the main key. Further, the factory application management 53 is managed with the factory code for identifying the factory and the drawing application code applied to the part number and the factory serving as the main key. Although the application model and factory are cited as targets here, other items (production lines and optional equipment and so forth, for example) can also be the targets. Further, the drawing application management 41, model application management 42, and factory application management 43 are constituted to manage the application start date and application termination date with respect to the main key. The application start date on which the application of the drawing application information 41a is started and the application termination date on which the application is terminated are managed.

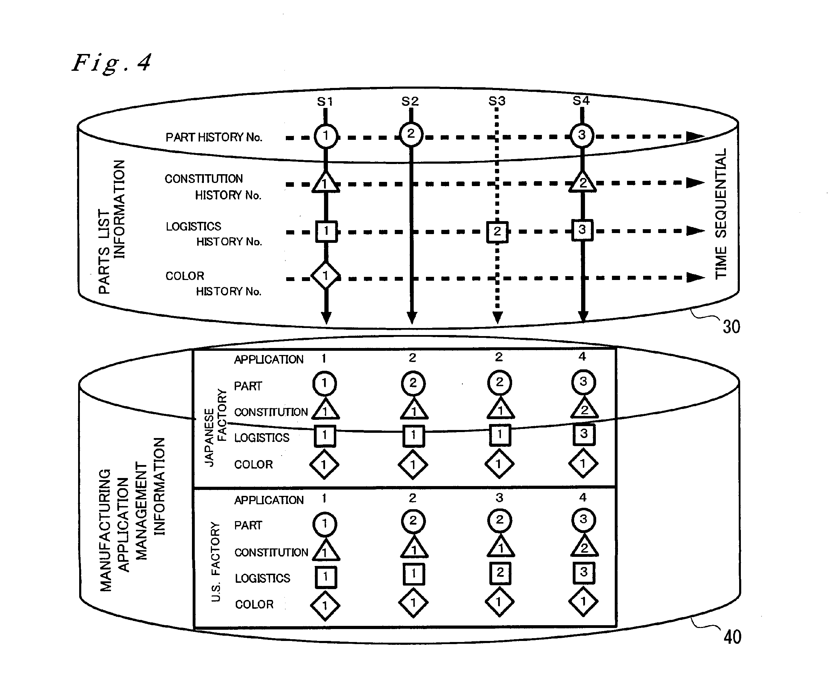

Thus, with regard to the data structure which is constituted as described above, the way in which the parts list information 30 and the drawing application information (modification history) are managed by using the manufacturing application management information 40 will now be described by means of Fig. 4. Further, Fig. 4 shows the states of parts that are applied to two factories which are a Japanese factory and a U.S. factory. The manufacturing application management information 40 is shown in a state where the drawing application management 41 and factory application management 43 are linked by using a part number and a drawing application code. Further, the historic numbers and drawing application codes and so forth are described as ranging from 1 in order to simplify the description (there are also cases, in actual systems, of complex code systems depending on the circumstances).

First, in a state where information on parts, that is, parts information 31 and constitution information 32 and so forth are first registered (step S1), all the historic numbers are registered in the parts list information 30 as 1. Further, when these combinations of historic numbers are applied to the factories, the drawing application codes of the drawing application management 41 are also 1. In this case, because the combinations are applied to both the Japanese factory and the U.S. factory, the respective factory codes of the factory application management 43 and the drawing application codes of the data by from the part numbers are 1. Step 2 represents a case where the specifications of the part are modified for actual production, for example. When a drawing is amended, new data are registered in the parts information 31 as 2, which is obtained by increasing the design modification historic number by 1. Further, because the combination of historic numbers (drawing application information) is also accordingly modified in the drawing application management 41, new data according to which the drawing application code is increased by one to become 2 and the parts historic number is 2 are added (constitution information 32, logistics information 33 and color information 34 are not modified and, therefore, the historic number remains 1). In the example in Fig. 4, because the amendment of the drawing is applied to the Japanese factory and U.S. factory, the drawing application code is updated to 2 in correlation with the respective factories in the factory application management 43.

Step S3 represents a case where a logistical destination is modified only in the U.S. factory, for example. Because the logistical destination is modified, data according to which the modification historic number is increased by one to become 2 are added to the logistics information 33 (the unmodified information is the same as that above). Further, in order to accordingly add a new combination of historic numbers to the drawing application management 41, data according to which the drawing application code is increased by one to become 3 and the logistical destination historic number is 2 are added. Further, in this case, because the logistical destination or the like of the Japanese factory has not been modified, the same state (that is, the drawing application code is 2) remains. Further, only the factory application management 43 of the U.S. factory is updated to the drawing application code 3.

Further, step S4 represents a case where the drawing, constitution and logistical destination are modified for the Japanese factory and U.S. factory by means of specification modification and so forth. So too in this case, new data obtained by increasing the respective historic numbers by one for the parts information 31, constitution information 32, and logistics information 33 are registered and these combinations are added to the drawing application management 41 by rendering the drawing application code 4. Further, at the same time, the drawing application code is updated to 4 in correlation with the Japanese factory and U.S. factory of the factory application management.

Thus, the modification history of the information constituting the parts list information 30 (parts information 31, constitution information 32, logistics information 33, and color information 34) can be managed because data obtained by increasing the historic number each time there is a modification are added. Further, because the parts list information 30 is the information that is applied to the actual products and the drawing application information 41a that is gathered by combining the historic numbers is managed by the drawing application management 41, even when any of the data stored in the parts list information 30 is modified, because only the data of the combination of historic numbers increases, there is no significant increase in the amount of data. Further, by managing the drawing application code that is actually applied so that the data of the drawing application management 41 can be unambiguously identified by the drawing application code, the parts that are applied to each factory are easily managed and the parts that are applied to each model are easily managed. Thus, the products that are produced by each factory which are developed on a world scale can also be centrally managed.

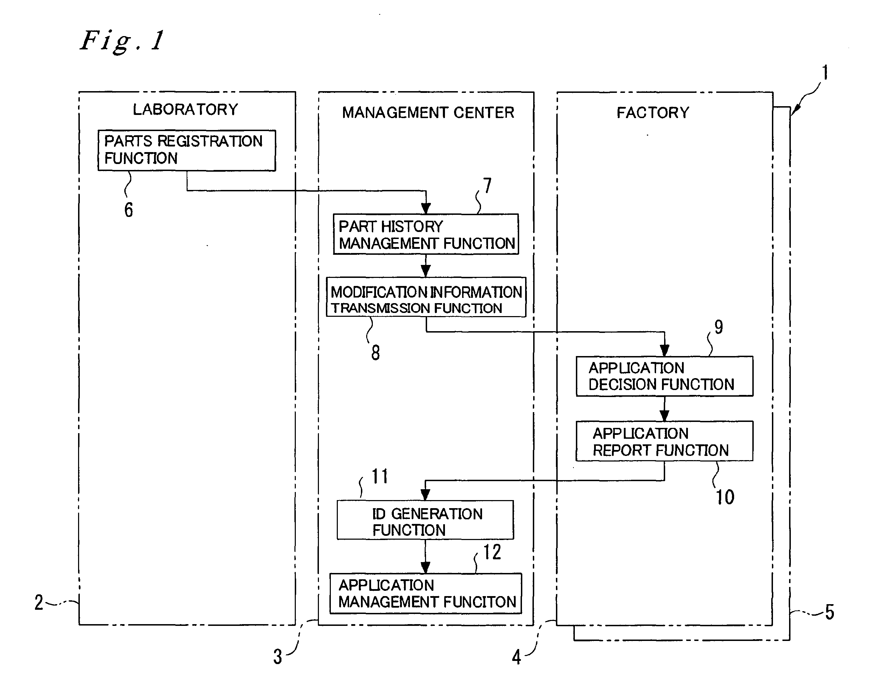

Thereafter, the application management system 1 that has the above data structure will be described by using Figs. 1, 5, and 6. Further, Figs. 1, 5, and 6 show only terminals 2, 4, and 5 and the server apparatus 3 as well as the functions installed therein. The network and so forth are omitted. First, the part where the design of parts is performed in the laboratory and initial information is registered and where it is judged whether to apply the parts to the product (application model) in the factory and the information is managed will be described by using Fig. 1 (corresponds to step S1 of Fig. 4). When a part is designed in the laboratory, the model code, part number, parts information, and the constitutional information and so forth associated with same are transmitted to the server apparatus 3 by the parts registration function 6 in the laboratory terminal 2. The server apparatus 3 receives this parts information and so forth and the respective information items are stored by the part history management function 7 as the parts information 41, constitution information 42, logistics information 43, and color information 44 of the parts list information 30 (the historic numbers are all 1 as shown in step S1 of Fig. 4). Thereupon, the factory (factory code) or the like to which the parts are applied is specified by using the production model information 61 managed by the production management system 60 described by using Fig. 2. Further, a combination of historic numbers (corresponding to the drawing application information 41a of Fig. 3) is then generated and the combination of historic numbers, part numbers, and model codes are transmitted to the respective factories (factory terminals 4 and 5) specified by the production model information 61 by means of the modification information transmission function 8.

The combination of historic numbers and the part number and model code transmitted by the server apparatus 3 are received by the factory terminals 4 and 5 and an application decision function 9 decides whether to apply the combination to the parts of the product model that corresponds with the model code in the respective factories. When it is decided that this combination will be applied, an application report that the parts corresponding with the combination of historic numbers are to be applied in accordance with the factory code of the factory and the model code of the applicable model and so forth is transmitted to the server apparatus 3 by the application report function 10. As a result of this application report, the server device 3 generates drawing application code by means of an ID generation function 11 with respect to the combination of historic numbers, stores the combination of historic numbers in the drawing application management 41 as the drawing application information 41a with the drawing application codes and part numbers and so forth serving as the main key by means of an application management function 12, and also stores the part numbers and drawing application codes together with the model code and factory code and so forth transmitted as the application report to the model application management 42 and factory application management 43 and so forth.

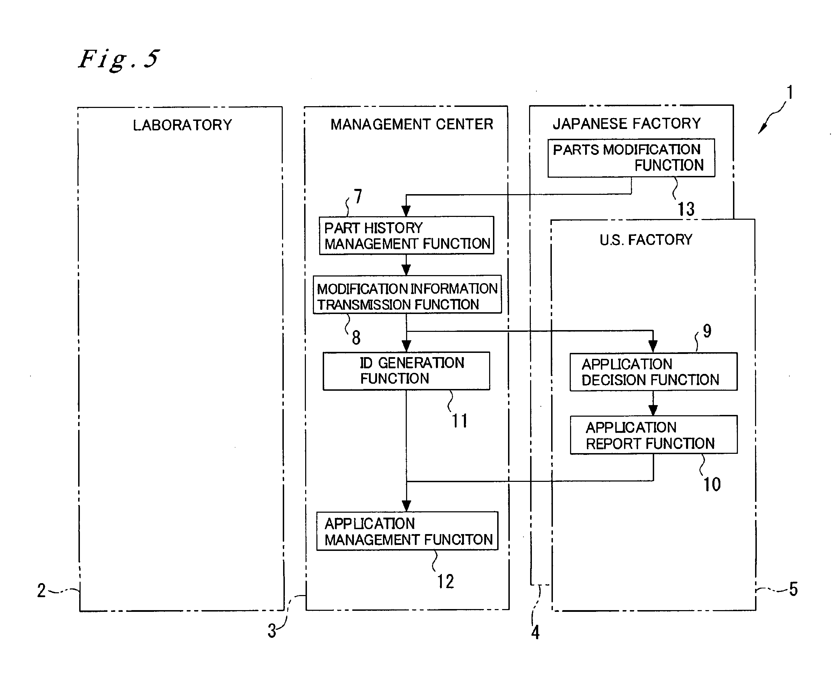

On the other hand, when there is a modification of specifications in a portion of the factories (corresponds to step S2 in Fig. 4), modification information of the part is transmitted to the server apparatus 3 together with the part numbers and model codes and so forth by the parts modification function 13 of the factory terminal of the factory (in this case, the factory terminal 4 of the Japanese factory), as shown in Fig. 5 (modification of parts information in the case of Fig. 4). Further, the modification information is received by the server apparatus 3 and stored as the respective information items 31 to 34 of the parts list information 30 by the part history management function 7. In addition, the combination of historic numbers of the modification information is generated by the modification information generation function 8 and transmitted to the factory terminal of the other factory (the factory terminal 5 of the U.S. factory in this case) together with the model code and so forth. Further, at the same time, after a drawing application code has been generated by the ID generation function 13, the combination of historic numbers is stored in the drawing application management 41 as drawing application information 41a by an application management function 14 with the drawing application code and part numbers and so forth serving as the main key. Thus, the modification implemented in the Japanese factory (factory terminal 4) is registered in the parts list information 30 and manufacturing application management information 40 by the server apparatus 3.

The factory that has received, by means of the factory terminal 5 (U.S. factory), the combination of modifications performed by the other factory (Japanese factory) transmitted in this manner determines the advisability of the application by means of the application decision function 9 and, when the combination of modifications is to be applied, transmits an application report to the server apparatus 3 by means of the application report function 10 in accordance with the factory code of the factory and the model code of the applicable model and so forth. Further, the server apparatus 3 updates the model application management 42 and factory application management 43 by means of the application management function 12 in correlation with the drawing application code by means of a combination of the factory code, model code, part numbers and historic numbers included in the application report.

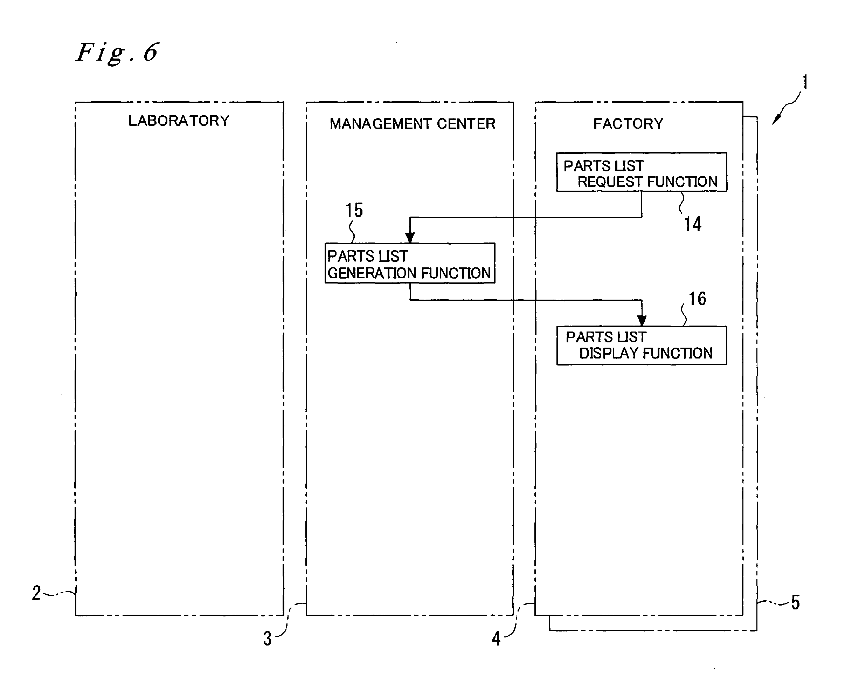

Further, as shown in Fig. 6, information on the parts (that is, a parts list in which parts corresponding with a plurality of part numbers are listed) associated with the factory code and model code can be acquired from the parts list information 30 by designating the factory code and model code by means of a parts list request function 14 from the factory terminals 4 and 5 of the respective factories. More specifically, the factory code and model code are transmitted to the server apparatus 3 by the parts list request function 14 and the required information is extracted from the parts information 31, model information 32, logistics information 33 and color information 34 of the parts list information 30 by means of the parts list generation function 15 by using these codes. Further, the extracted information is transmitted to the required factory terminal and displayed as a parts list by a parts list display function 16.

As mentioned earlier, the constitution is such that the parts list information 30 and manufacturing application management information 40 are centrally managed by the server apparatus 3, and the information can be fetched from the factories and so forth via the network 50 and modified, and constituted to permit modifications. Hence, the management of data is straightforward and factories that have expanded globally can be managed all together. Moreover, because data are centrally managed, parts sharing is made possible and design costs, management costs, and retail costs can be reduced.

## Claims

1. An application management system, comprising:
parts information transmission means for transmitting parts information in correlation with a product model to a plurality of locations;
application decision means for deciding whether to apply the parts information correlated with the product model to producing the product model at each of the locations;
parts information reporting means for reporting the application of the parts information to the product model as an application report when the application of the parts information is decided at each of the locations; and
application management means for receiving the application report and managing the application of the parts information at each of the locations.

2. An application management system, comprising:
parts list information storage means for managing parts information and modification information of the parts information;
parts modification information transmission means for transmitting, when there has been a modification to the parts information, the parts information and the modification information in correlation with model information that represents the product model to a plurality of locations;
application decision means for deciding whether to apply the modified parts information and modification information to the product model at each of the locations;
parts information reporting means for reporting, when the application of the parts information and the modification information to the product model is decided at each of the locations, the parts information and the modification information as an application report together with location information representing the locations and the model information;
ID generation means for receiving the application report and generating identification information that unambiguously identifies auxiliary information comprising a combination of the modification information, the location information, and the model information; and
application management means for storing the identification information and the auxiliary information and for updating and storing, as the location information, all the locations to which the parts information and the modification information corresponding with the identification information are applied when there is an increase in the locations to which the parts information and the modification information are applied.

3. The application management system according to claim 2, wherein the parts information is constituted comprising at least one information item from among design information for parts of the product model, constitution information for the parts, logistics information for the parts, and color information for the parts.

4. The application management system according to claim 2 or 3, comprising:
parts list information request means for inputting and transmitting the location information and the model information at each of the locations; and
parts list generation means for receiving the location information and the model information, collecting the parts information corresponding with the location information and the model information, and transmitting the parts information to the locations.
